# EUROPÄISCHE PATENTSCHRIFT

(11) **EP 0 600 273 B1**
(45) Veröffentlichungstag und Bekanntmachung des Hinweises auf die Patenterteilung: **08.04.1998**
(21) Anmeldenummer: 93118196.0
(22) Anmeldetag: 10.11.1993
(51) Int. Cl.: H04B 10/12, G02B 6/34, G02F 1/035, H04B 10/26

(54) **Integriert-optisches Teilnehmerendgerät und entsprechende Kopfstation**
Integrated optical subscriber terminal and corresponding central office
Terminal d'abonné optique intégré et station de tête correspondant

(30) Priorität: 03.12.1992 DE 4240627
(43) Veröffentlichungstag der Anmeldung: 08.06.1994
(73) Patentinhaber: ROBERT BOSCH GMBH, 70442 Stuttgart (DE)
(72) Erfinder: Weber, Jens, Dr. Dipl.-Ing., D-65812 Bad Soden (DE); Kragl, Hans, Dr. Dipl.-Ing., D-64372 Ober-Ramstadt (DE); Rech, Wolf-Henning, Dr., D-64347 Griesheim (DE)

(56) Entgegenhaltungen:
- EP-A- 0 496 348
- DE-A- 4 038 654
- IEEE JOURNAL OF QUANTUM ELECTRONICS. Bd. 13, Nr. 4 , April 1977 , NEW YORK US Seiten 206 - 208 AN ET AL 'Electrooptic-distributed Bragg-reflection modulators for integrated optics'
- JOURNAL OF OPTICAL COMMUNICATIONS. Bd. 7, Nr. 4 , Dezember 1986 , BERLIN DE Seiten 136 - 138 HEIDRICH 'Polarisation and wavelength multiplexed bidirectional single fibre subscriber loop'

## Beschreibung

### Stand der Technik

Dier Erfindung geht aus von einer integriert-optischen Schaltung nach der Gattung der Ansprüche 1 - 3. Eine solche Anordnung ist bekannt aus der DE 40 38 654 A1 bekannt. Bei der DE 40 38 654 A ist ein integrierter optischer Multiplexer/Demultiplexer vorgesehen zur Kopplung von Energie zwischen Kanalwellenleitern. Der mit einem Empfangssystem ausgestattete zweite Kanalwellenleiter weist ein angekoppeltes Braggsches Ablenkelement und einen Fotodetektor auf.

Aus dem Aufsatz ,,FSK with direct detection in optical multiple-access FDM networks" von Ivan P. Kaminow in I.E.E.E Journal on selected areas in Communications, Volume 8 No. 6 August 1990, ist ein nichtkohärent detektierendes optisches Netzwerk bekannt, bei dem optische Signale von einem Sender zu einem Empfänger gelangen, wo diese nichtkohärent detektiert und demoduliert werden. Um mit dem Empfänger außerdem auch Signale zum Sender zurückzusenden, ist hierbei ein Laser vorgesehen, der optische Signale zum Sender aussendet. Zur Verbindung mehrerer Sender und mehrerer Empfänger wird außerdem ein Sternkoppler eingesetzt. Aus der nicht vorveröffentlichten Anmeldung DE P 4142922.2 ist es weiterhin bekannt, für optische Übertragungssysteme, bei denen ein Frequenzmultiplexverfahren angewendet wird, indem Licht verschiedener Frequenzen simultan in einer Glasfaser geführt wird, eine integriert-optische Schaltung vorzusehen, welche zur Auskopplung und Detektion der optischen Signale evaneszent an einen Wellenleiter angekoppelte Bragg-Resonatoren mit an die Bragg-Resonatoren angekoppelten Fotodioden aufweist. Der dabei offenbarte Bragg-Resonator eignet sich sowohl als senderseitiger frequenzselektiver Modulator als auch als frequenzselektiver Empfänger und Demodulator. Für die Modulation/Demodulation wird dabei der Brechungsindex im Bereich des Resonators über den elektrooptischen Effekt verändert. In dem Aufsatz ,,Theory of cascaded quarter wave shifted distributed feedback resonators" von Hermann A. Haus im I.E.E.E Journal of Quantum Electronics, Volume 28 No. 1, Januar 1992 wird der Einsatz mehrerer Feedback-Resonatoren an einem Lichtwellenleiter offenbart. Diese Resonatoren dienen entweder evaneszent angekoppelt als Bragg-Resonator zur Reflexion des Signals oder auf den Lichtwellenleiter aufgesetzt als Bragg-Resonator zur Transmission eines Signals. Weiterhin ist aus I.E.E.E Photonics Technology Letters, Volume 2, No.9, September 1990 in dem Aufsatz "Pigtailed single-mode fiber optic light modulator in Silicon" von Solgaard, Godil, Hemenway und Bloom ein Reflexionsmodulator bekannt, mit dem ein ankommendes Signal elektrooptisch moduliert und reflektiert wird.

Die erfindungsgemäße integriert-optische Schaltung mit den kennzeichnenden Merkmalen der Ansprüche 1 - 3 hat demgegenüber den Vorteil, daß optische modulierte Signale zu einem Empfänger ausgesandt werden können, ohne ein aktives Sendeelement wie z. B. einen Laser zu benötigen. Daraus erwächst der weitere Vorteil der Platzersparnis, da kein Sendelaser in der integriert-optischen Schaltung vorgesehen werden muß. Des weiteren handelt es sich um eine äußerst kostensparende Realisierung, da für ein System mit vielen Teilnehmern bereits ein Sendelaser genügt, um alle Empfänger mit einem optischen, im Empfänger zu modulierenden und zu reflektierenden Signal zu versorgen. Die Ausfallwahrscheinlichkeit und der Wartungsaufwand reduzieren sich dadurch außerdem erheblich.

Durch die in den Ansprüchen 4 - 7 aufgeführten Maßnahmen sind vorteilhafte Weiterbildungen und Verbesserungen der in den Ansprüchen 1 - 3 angegebenen integriert-optischen Schaltungen möglich. Der Anspruch 8 betrifft ein System mit einer integriert-optischen Schaltung nach einem der Ansprüche 1 - 7. Der Anspruch 9 bezieht sich auf eine Ausgestaltung dieses Systems.

Besonders vorteilhaft ist es, den aufgesetzten Bragg-Resonator thermooptisch abstimmbar auszuführen, da sich so eine variable und doch einfach realisierbare Einstellbarkeit der Resonanzfrequenz erreichen läßt. Weiter vorteilhaft ist es, mehrere auf verschiedene Frequenzen abgestimmte Bragg-Resonatoren vorzusehen, da die integriert-optische Schaltung dadurch für optische Signale, die im Frequenzmultiplex übertragen werden, geeignet ist. Außerdem handelt es sich hierbei um eine platzsparende Ausgestaltung eines Empfängers, da nur eine integriert-optische Schaltung für den Empfang vieler Kanäle notwendig ist. Die Auslegung der integriert-optischen Schaltungen für den Empfang breit- und schmalbandiger Signale eröffnet der integriert-optischen Schaltung in vorteilhafter Weise den Bereich des Empfangs von Fernsehsignalen und gleichzeitig des Betriebs als bidirektional angeschlossener Telefonkanalteilnehmer. Eine Kopfstation für die integriert-optische Schaltung kann somit als vorteilhafte Kombination von Sender und Empfänger für z. B. Fernseh- und Telefonsignale eingesetzt werden. Die Zwischenschaltung eines Sternkopplers zwischen Kopfstation und Empfängern bedeutet eine weitere Aufwandsersparnis, da mit nur einer Kopfstation viele Empfänger erreichbar sind und gleichzeitig der Empfang der Signale vieler Empfänger an einer Kopfstation realisiert werden kann.

### Zeichnung

Ausführungsbeispiele der Erfindung sind in der Zeichnung dargestellt und in der nachfolgenden Beschreibung näher erläutert.
Es zeigen
Figur 1 eine schematische Darstellung einer integriert-optischen Schaltung mit einem aufgesetzten Bragg-Reflektor,
Figur 2 eine Kopfstation für eine integriert-optische Schaltung,
Figur 3 eine schematische Darstellung einer integriert-optischen Schaltung mit einem aufgesetzten Bragg-Resonator und einem Reflexionsmodulator,
Figur 4 eine schematische Darstellung einer integriert-optischen Schaltung mit einem evaneszent angekoppelten Bragg-Resonator.

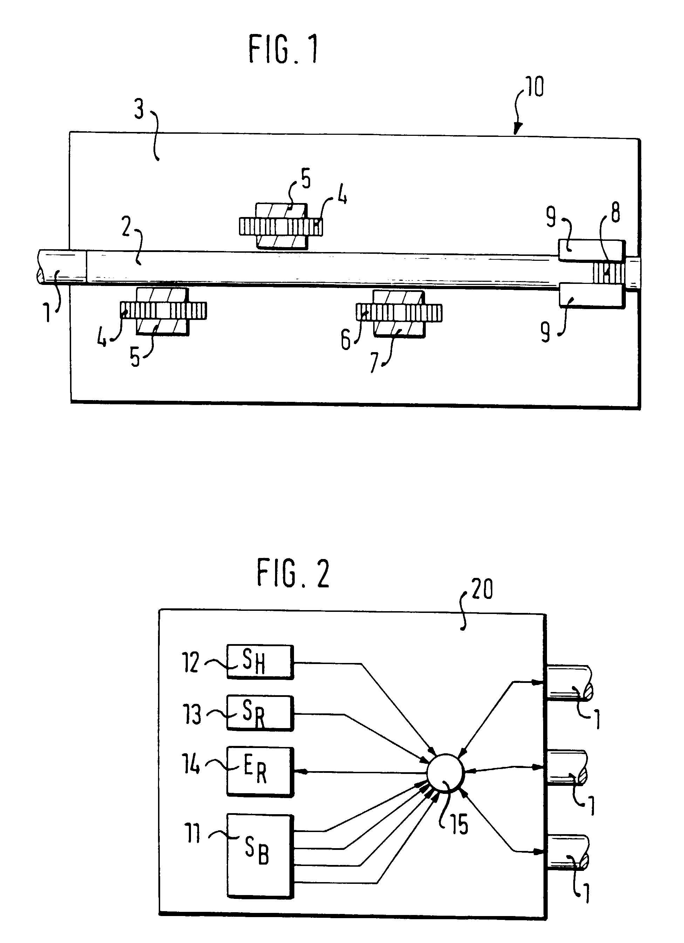

In Figur 1 ist eine erfindungsgemäße integriert-optische Schaltung dargestellt. Ein Lichtleiter besteht aus einer Glasfaser 1 und einem den Verlauf der Glasfaser 1 fortsetzenden Lichtwellenleiter 2. Der Lichtwellenleiter 2 ist in einem Substrat 3 eingebettet. Zu je einer Seite des Lichtwellenleiters 2 liegt ein evaneszent angekoppelter Bragg-Resonator 4, an den ein Fotoelement 5 angekoppelt ist. Weiter liegt auf einer Seite des Lichtwellenleiters 2 ein weiterer evaneszent angekoppelter Bragg-Resonator 6 mit einem weiteren Fotoelement 7. Im weiteren Verlauf des Lichtwellenleiters 2 vorgesehen ist ein auf den Lichtwellenleiter 2 aufgesetzter elektrooptisch abstimmbarer Bragg-Reflektor 8 mit Steuerelektroden 9. Der Lichtwellenleiter 2 besteht aus einem Polymer mit höherem Brechungsindex als das Substrat 3. Zumindest im Bereich des aufgesetzten elektrooptisch abstimmbaren Bragg-Reflektors 8 ist der Lichtwellenleiter 2 aus einem NLO-(nichtlinear-optischen) Polymer, dessen Brechungsindex durch ein elektrisches Feld veränderbar ist.

In der Glasfaser 1 geführtes Licht gelangt in den Lichtwellenleiter 2. Das Licht umfaßt optische Signale mehrerer Frequenzen. Die Bragg-Resonatoren 4, 6 sind jeweils auf eine einzige Resonanzfrequenz ausgelegt und entsprechend dimensioniert. Durch die evaneszente Ankopplung an den Lichtwellenleiter 2 wird genau das optische Signal mit der Resonanzfrequenz des Bragg-Resonators 4, 6 von dem an den Bragg-Resonator 4, 6 angekoppelten Fotoelement 5, 7 detektiert und vom Bragg-Resonator 4, 6 wieder in die Gegenrichtung des ankommenden optischen Signals reflektiert. Durch die Anordnung mehrerer Bragg-Resonatoren 4, 6 kann so ein Spektrum mehrerer Frequenzen mit einer integriert-optischen Schaltung detektiert werden. Der auf den Lichtwellenleiter 2 aufgesetzte elektrooptisch abstimmbare Bragg-Reflektor 8 reflektiert das optische Signal, das die gleiche Frequenz besitzt wie die Reflexionsfrequenz des elektrooptisch abstimmbaren Bragg-Reflektors 8, nachdem das optische Signal durch das elektrische Feld der Steuerelektroden 9 intensitätsmoduliert wurde.

Figur 2 zeigt eine Kopfstation zur Ansteuerung einer erfindungsgemäßen integriert-optischen Schaltung. Die Kopfstation 20 umfaßt einen Breitband-Sender 11, der mehrere optische breitbandige Signale verschiedener Frequenzen abgibt. Außerdem ist ein Hinkanal-Sender 12 sowie ein Rückkanal-Sender 13 vorgesehen. Die Sender 11, 12, 13 sowie ein Rückkanal-Empfänger 14 sind an einer Seite eines Sternkopplers 15 angeschlossen. Auf der anderen Seite sind an den Sternkoppler 15 mehrere Glasfasern 1 angeschlossen.

Der Breitband-Sender 11 gibt optische breitbandige Signale verschiedener Frequenzen über den Sternkoppler 15 an die Glasfasern 1 ab. An jeder Glasfaser 1 kann ein Empfänger in Gestalt der erfindungsgemäßen integriert-optischen Schaltung angeschlossen sein. Der Hinkanal-Sender 12 sendet ein optisches schmalbandiges Signal als Hinkanal-Signal an den Sternkoppler 15. Ebenso sendet der Rückkanal-Sender 13 ein optisches unmoduliertes Signal an den Sternkoppler 15, von dem alle von den Sendern 11, 12, 13 eingespeisten optischen Signale an die Glasfasern 1 abgegeben werden. Als optische breitbandige Signale sind z. B. Fernsehsignale denkbar. Das Hinkanal-Signal kann z. B. einen Sendekanal einer Telefonverbindung darstellen. Das optische unmodulierte Signal des Rückkanal-Senders 13 gelangt über die Glasfaser 1 zur integriert-optischen Schaltung, wo dieses Rückkanal-Signal moduliert und reflektiert wird. Das reflektierte Rückkanal-Signal gelangt wiederum über die Glasfaser 1 und den Sternkoppler 15 zum Rückkanal-Empfänger 14, wo es demoduliert werden kann. Das reflektierte Rückkanal-Signal kann z. B. einen weiteren Sendekanal der Telefonverbindung darstellen. Somit ist ohne eine aktive Sendeeinrichtung, wie z. B. einen Laser, in der Teilnehmerstation, welche die integriert-optische Schaltung beinhaltet, ein bidirektionaler Austausch von optischen Signalen möglich.

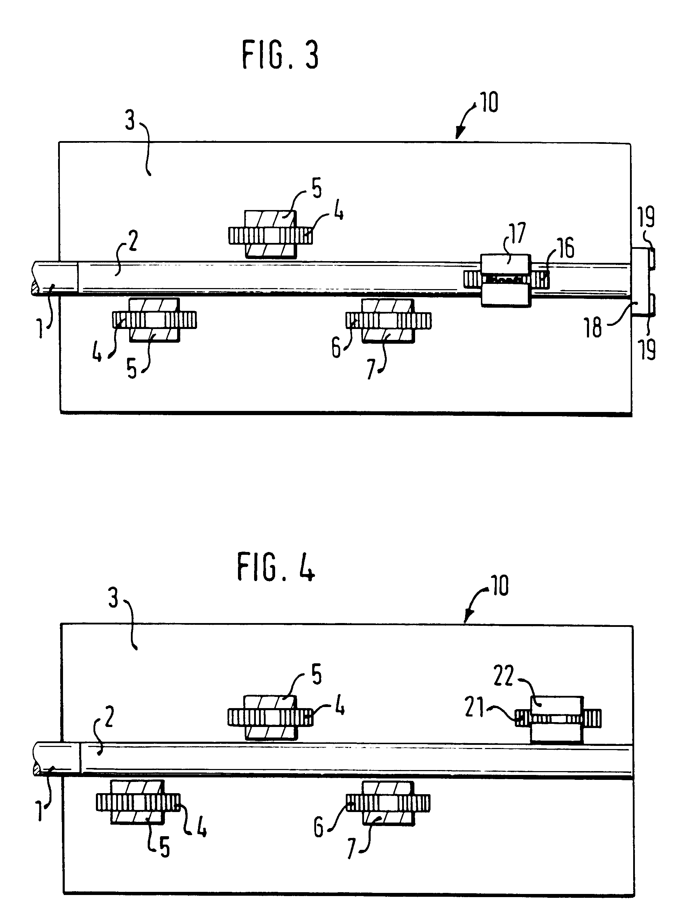

Figur 3 zeigt eine weitere Realisierungsmöglichkeit einer integriert-optischen Schaltung. Die integriert-optische Schaltung in Figur 3 unterscheidet sich von der in Figur 1 dargestellten integriert-optischen Schaltung dadurch, daß anstelle des Bragg-Reflektors 8 und der Steuerelektroden 9 ein auf den Lichtwellenleiter 2 aufgesetzter Bragg-Resonator 16 vorgesehen ist, der einen Thermoaktor 17 mit einem mäanderförmigen Heizdraht aufweist. Weiterhin ist auf der Stirnfläche des Lichtwellenleiters 2 ein Reflexionsmodulator 18 mit Steueranschlüssen 19 vorgesehen. Der aufgesetzte Bragg-Resonator 16 ist mittels des Thermoaktors 17 thermooptisch abstimmbar. Der Lichtwellenleiter 2 besteht aus einem linear-optischen Polymer.

Durch ohmsche Wärmefreisetzung in unmittelbarer Nähe des Lichtwellenleiters 2 unter Ansteuerung des Thermoaktors 17 läßt sich das unter dem aufgesetzten Bragg-Resonator 16 liegende Polymer des Lichtwellenleiters 2 thermooptisch in seinem Brechungsindex variieren. Dadurch variiert auch die Resonanzfrequenz des aufgesetzten Bragg-Resonators 16. Somit läßt sich thermooptisch die Frequenz einstellen, die der aufgesetzte Bragg-Resonator 16 passieren läßt. Die Frequenz des optischen unmodulierten Signals wird durch den aufgesetzten Bragg-Resonator 16 gefiltert. Dieses bandpaßgefilterte optische unmodulierte Signal gelangt zum Reflexionsmodulator 18. Dessen Reflexion läßt sich mittels der Steueranschlüsse 19 elektrooptisch variieren. Dadurch entsteht ein intensitätsmoduliertes Reflexionssignal, welches als reflektiertes Rückkanalsignal wieder über die Glasfaser 1 und den Sternkoppler 15 zum Rückkanal-Empfänger 14 gelangt.

In Figur 4 ist eine weitere integriert-optische Schaltung dargestellt, die sich von der integriert-optischen Schaltung in Figur 1 insofern unterscheidet, als anstelle des elektrooptisch abstimmbaren aufgesetzten Bragg-Reflektors 8 und der Steuerelektroden 9 ein an den Lichtwellenleiter 2 evaneszent angekoppelter elektrooptisch abstimmbarer Bragg-Resonator 21 mit elektrischen Anschlüssen 22 vorgesehen ist. Hier besteht der Lichtwellenleiter 2 im Bereich vor den evaneszent angekoppelten elektrooptisch abstimmbaren Bragg-Resonator 21 aus einem linear-optischen Polymer. Der Bragg-Resonator 21 muß aus einem NLO-Polymer bestehen.

Durch die evaneszente Ankopplung an den Lichtwellenleiter 2 reflektiert der evaneszent angekoppelte elektrooptisch abstimmbare Bragg-Resonator 21 genau die Frequenz, die seiner Resonanzfrequenz entspricht. Durch Erzeugung eines elektrischen Feldes mittels der elektrischen Anschlüsse 22 wird das nichtlinear-optische Polymer des evaneszent angekoppelten elektrooptisch abstimmbaren Bragg-Resonators 21 in seinem Brechnungsindex verändert. Somit läßt sich auch hier die Intensität des optischen unmodulierten Signals mit der Resonanzfrequenz des evaneszent angekoppelten elektrooptisch abstimmbaren Bragg-Resonators 21 elektrooptisch modulieren und dann reflektieren. Das intensitätsmodulierte Reflexionssignal gelangt wiederum als reflektiertes Rückkanal-Signal zum Rückkanal-Empfänger 14.

Es ist weiterhin möglich mehrere integriert-optische Schaltungen hintereinander zu schalten, indem an den Lichtwellenleiter 2 wiederum eine neue Glasfaser 1 angekoppelt wird, der weitere integriert-optische Schaltungen mit dazwischenliegenden Glasfasern 1 folgen können. Dies ist jedoch nur mit den integriert-optischen Schaltungen gemäß Figur 1 bzw. Figur 4 möglich.

Der Betrieb eines Netzes mit mehreren integriert-optischen Schaltungen erfolgt zweckmäßigerweise unter Einsatz eines Netzprotokolls, das den einzelnen Teilnehmern Zeitfenster zuordnet, in denen jeweils ein Teilnehmer sein optisches Antwortsignal an den Empfänger sendet.

## Patentansprüche

1. Integriert-optische Schaltung (10) zum Empfangen von wenigstens einem in einem Lichtleiter (1) übertragenen optischen Signal, mit einem Lichtwellenleiter (2) und wenigstens einem an den Lichtwellenleiter evaneszent angekoppelten Bragg-Resonator (4) und an den evaneszent angekoppelten Bragg-Resonator angekoppelten Fotoelement (5), dadurch gekennzeichnet, daß eine Modulationsvorrichtung vorgesehen ist, die ein empfangenes weiteres optisches Signal moduliert und zurückreflektiert und daß die Modulationsvorrichtung ein auf den Lichtwellenleiter (2) aufgesetzter elektrooptisch abstimmbarer Bragg-Reflektor (8) ist.

2. Integriert-optische Schaltung (10) zum Empfangen von wenigstens einem in einem Lichtleiter (1) übertragenen optischen Signal mit einem Lichtwellenleiter (2) und wenigstens einem an den Lichtwellenleiter (2) evaneszent angekoppelten Bragg-Resonator (4) und an den evaneszent angekoppelten Bragg-Resonator angekoppelten Fotoelemen (5), dadurch gekennzeichnet, daß eine Modulationsvorrichtung vorgesehen ist, die ein empfangenes weiteres optisches Signal moduliert und zurückreflektiert, und daß die Modulationsvorrichtung ein an den Lichtwellenleiter (2) evaneszent angekoppelter elektrooptisch abstimmbarer Bragg-Resonator (21) ist.

3. Integriert-optische Schaltung (10) zum Empfangen von wenigstens einem in einem Lichtleiter (1) übertragenen optischen Signal mit einem Lichtwellenleiter (2) und wenigstens einem an den Lichtwellenleiter (2) evaneszent angekoppelten Bragg-Resonator (4) und an den evaneszent angekoppelten Bragg-Resonator angekoppelten Fotoelement (5), dadurch gekennzeichnet, daß eine Modulationsvorrichtung vorgesehen ist, die ein empfangenes weiteres optisches Signal moduliert und zurückreflektiert, und daß die Modulationsvorrichtung einen auf den Lichtwellenleiter (2) aufgesetzten Bragg-Resonator (16) und einen im weiteren Verlauf des Lichtwellenleiters (2) nach dem aufgesetzten Bragg-Resonator (16) angeordneten Reflektionsmodulator (18) umfaßt.

4. Integriert-optische Schaltung nach Anspruch 3, dadurch gekennzeichnet, daß der aufgesetzte Bragg-Resonator (16) thermooptisch abstimmbar ist.

5. Integriert-optische Schaltung nach einem der Ansprüche 1 - 4, dadurch gekennzeichnet, daß die integriert-optische Schaltung mehrere an den Lichtleiter (1, 2) evaneszent angekoppelte Bragg-Resonatoren (4) mit daran angekoppelten Fotoelementen (5) aufweist, die auf verschiedene Frequenzen abgestimmt sind und daß mehrere optische Signale mit verschiedenen Frequenzen im Lichtleiter (1, 2) übertragen werden und mit den evaneszent angekoppelten Bragg-Resonatoren (4) auskoppelbar sind.

6. Integriert-optische Schaltung nach einem der Ansprüche 1 - 5, dadurch gekennzeichnet, daß der wenigstens eine evaneszent angekoppelte Bragg-Resonator (4) ein breitbandiges Signal auskoppelt und die Modulationsvorrichtung ein Signal niedriger Datenrate moduliert und reflektiert.

7. Integriert-optische Schaltung nach Anspruch 5, dadurch gekennzeichnet, daß die an den Lichtleiter (1, 2) evaneszent angekoppelten Bragg-Resonatoren (4) sowohl breitbandige als auch schmalbandige Signale auskoppeln und die Modulationsvorrichtung ein schmalbandiges Signal moduliert und reflektiert.

8. System mit einer integriert-optischen Schaltung nach einem der Ansprüche 1-7, und mit einer Kopfstation zur Aussendung und zum Empfang von optischen Signalen, welche über einen Lichtleiter (1, 2) zu bzw. von der integriert-optischen Schaltung laufen, mit folgenden Merkmalen:
- einem Sender (12) zur Aussendung eines optischen Signals,
- wenigstens einem weiteren Sender (13) zur Aussendung eines weiteren optischen Signals,
- wenigstens einem Empfänger (14) zum Empfang des von der Modulationsvorrichtung modulierten und zurückreflektierten weiteren optischen Signals.

9. System nach Anspruch 8, dadurch gekennzeichnet, daß ein Sternkoppler (15) vorgesehen ist, an den auf der einen Seite die Sender (12, 13) und der Empfänger (14) und auf der anderen Seite wenigstens ein Lichtleiter (1, 2) angeschlossen sind.

## Claims

1. Integrated optical circuit (10) for receiving at least one optical signal transmitted in an optical fibre (1), having an optical waveguide (2) and at least one Bragg resonator (4) evanescently coupled to the optical waveguide, and a photocell (5) coupled to the evanescently coupled Bragg resonator, characterized in that a modulation device is provided which modulates and reflects back a further received optical signal, and in that the modulation device is an electro-optically tunable Bragg reflector (8) fitted on the optical waveguide (2).

2. Integrated optical circuit (10) for receiving at least one optical signal transmitted in an optical fibre (1), having an optical waveguide (2) and at least one Bragg resonator (4) evanescently coupled to the optical waveguide, and a photocell (5) coupled to the evanescently coupled Bragg resonator, characterized in that a modulation device is provided which modulates and reflects back a further received optical signal, and in that the modulation device is an electro-optically tunable Bragg resonator (21) evanescently coupled to the optical waveguide (2).

3. Integrated optical circuit (10) for receiving at least one optical signal transmitted in an optical fibre (1), having an optical waveguide (2) and at least one Bragg resonator (4) evanescently coupled to the optical waveguide (2), and a photocell (5) coupled to the evanescently coupled Bragg resonator, characterized in that a modulation device is provided which modulates and reflects back a further received optical signal, and in that the modulation device comprises a Bragg resonator (16) fitted on the optical waveguide (2) and a reflection modulator (18) arranged in the continuation of the optical waveguide (2) after the fitted Bragg resonator (16).

4. Integrated optical circuit according to Claim 3, characterized in that the fitted Bragg resonator (16) is thermo-optically tunable.

5. Integrated optical circuit according to one of Claims 1 to 4, characterized in that the integrated optical circuit has a plurality of Bragg resonators (4) which are evanescently coupled to the optical fibre (1, 2), have photocells (5) coupled to them and are tuned to different frequencies, and in that a plurality of optical signals with different frequencies are transmitted in the optical fibre (2) and can be extracted using the evanescently coupled Bragg resonators (4).

6. Integrated optical circuit according to one of Claims 1 to 5, characterized in that the at least one evanescently coupled Bragg resonator (5) extracts a broad-band signal, and the modulation device modulates and reflects a signal with a low data rate.

7. Integrated optical circuit according to Claim 5, characterized in that the Bragg resonators (4) evanescently coupled to the optical fibre (1, 2) extract both broad-band and narrow-band signals, and the modulation device modulates and reflects a narrow-band signal.

8. System having an integrated optical circuit according to one of Claims 1 - 7, and having a head end for transmitting and receiving optical signals, which propagate via an optical fibre (1, 2) to and from the integrated optical circuit, having the following features:
- a transmitter (12) for transmitting an optical signal,
- at least one further transmitter (13) for transmitting a further optical signal,
- at least one receiver (14) for receiving the further optical signal modulated and reflected back by the modulation device.

9. System according to claim 8, characterized in that a star coupler (15) is provided, to which the transmitter (12, 13) and the receiver (14) are connected on one side, and at least one optical fibre (1, 2) is connected on the other side.

## Revendications

1. Circuit optique intégré (10) pour la réception d'au moins un signal optique transmis dans un guide de lumière (1), comprenant un guide de lumière (2) et au moins un résonateur de Bragg (4) couplé de manière évanescente sur le guide de lumière et un composant photoélectrique (5) couplé sur le résonateur de Bragg lui-même couplé de manière évanescente,
caractérisé en ce qu'
• il comprend un dispositif de modulation qui module un autre signal optique reçu et le réfléchit en retour et,
• le dispositif de modulation est un réflecteur de Bragg (8) accordé par voie électro-optique et placé sur le guide de lumière (2).

2. Circuit optique intégré (10) pour la réception d'au moins un signal optique transmis par un guide de lumière (1), comprenant un guide de lumière (2) et au moins un résonateur de Bragg (4) couplé de manière évanescente sur le guide de lumière (2), et un composant photoélectrique (5) couplé sur le résonateur de Bragg lui-même couplé de manière évanescente,
caractérisé par
• un dispositif de modulation qui module et renvoie un autre signal optique reçu et
• le dispositif de modulation est un résonateur de Bragg (21) accordé de manière optoélectronique, couplé de façon évanescente sur le guide de lumière (1).

3. Circuit optique intégré (10) pour la réception d'au moins un signal optique transmis par un guide de lumière (1), comprenant un guide de lumière (2) et au moins un résonateur de Bragg (4) couplé de manière évanescente sur le guide de lumière (2), et un composant photoélectrique (5) couplé sur le résonateur de Bragg lui-même couplé de manière évanescente,
caractérisé par
• un dispositif de modulation qui module un autre signal optique reçu et le réfléchit et,
• le dispositif de modulation est un résonateur de Bragg (16) monté sur le guide de lumière (2) et comprend un modulateur de réflexion (18) prévu sur le guide de lumière (2) en aval du résonateur de Bragg (16).

4. Circuit optique intégré selon la revendication 3,
caractérisé en ce que
le résonateur de Bragg (16), mis en place, est accordable par voie thermo-optique.

5. Circuit optique intégré selon l'une des revendications 1 à 4,
caractérisé en ce que
• le circuit optique intégré comporte plusieurs résonateurs de Bragg (4) couplés de manière évanescente sur les guides de lumière (1, 2) avec des composants photoélectriques (5) couplés qui sont accordés sur différentes fréquences et,
• plusieurs signaux optiques sont transmis dans le guide de lumière (1, 2) à des fréquences différentes et peuvent être découplés par les résonateurs de Bragg (4) couplés de manière évanescente.

6. Circuit optique intégré selon l'une des revendications 1 à 5,
caractérisé en ce qu'
au moins un résonateur de Bragg (4), couplé de manière évanescente découple un signal en bande large et le dispositif de modulation module et réfléchit un signal avec une vitesse de transmission de données plus faible.

7. Circuit optique intégré selon la revendication 5,
caractérisé en ce que
les résonateurs de Bragg (4) couplés de manière évanescente sur les guides de lumière (1, 2) découplent des signaux à la fois en bande large et en bande étroite et le dispositif de modulation module et réfléchit un signal en bande étroite.

8. Système comprenant un circuit optique intégré selon l'une des revendications 1 à 7 et une station de tête pour l'émission et la réception de signaux optiques passant par un guide de lumière (1, 2) pour être échangé avec le circuit intégré et ayant les caractéristiques suivantes :
• un émetteur (12) pour émettre un signal optique,
• au moins un autre émetteur (13) pour émettre un autre signal optique,
• au moins un récepteur (14) pour recevoir l'autre signal optique modulé par le dispositif de modulation et réfléchi en retour.

9. Système selon la revendication 8,
caractérisé par
un coupleur en étoile (15) dont un côté est branché sur les émetteurs (12, 13) et le récepteur (14) et dont l'autre côté est branché sur au moins un guide de lumière (1, 2).
